# FASCICULE DE BREVET EUROPEEN

(11) **EP 3 126 668 B1**
(45) Date de publication et mention de la délivrance du brevet: **21.04.2021**
(21) Numéro de dépôt: 15721765.4
(22) Date de dépôt: 31.03.2015
(51) Int. Cl.: F03B 17/06, F03D 3/06, F03B 3/14

(54) **ROTOR DE TYPE SAVONIUS**
SAVONIUS-ROTOR
SAVONIUS ROTOR

(30) Priorité: 31.03.2014 FR 1452798
(43) Date de publication de la demande: 08.02.2017
(73) Titulaire: Université d'Aix Marseille, 13284 Marseille Cedex 07 (FR); Centre National de la Recherche Scientifique, 75016 Paris (FR)
(72) Inventeur: GUIGNARD, Stéphan Norbert, 13210 Saint Rémy de Provence (FR)
(74) Mandataire: de Roquemaurel, Bruno
(86) Numéro de dépôt international: PCT/FR2015/050837
(87) Numéro de publication internationale: WO 2015/150697

(56) Documents cités:
- WO-A1-2006/063833
- WO-A2-2012/117272
- JP-A- 2009 203 968
- JP-A- 2009 209 728
- KR-A- 20120 027 335
- US-A- 4 424 451
- US-A1- 2012 280 510

## Description

La présente invention concerne un rotor utilisé dans les éoliennes ou les hydroliennes, et en particulier les rotors comprenant des pales qui, sous l'effet d'un écoulement de fluide, transmet à l'axe de rotation du rotor durant un tour de rotation autour de cet axe, alternativement un couple moteur entrainant le rotor en rotation, et un couple résistant, s'opposant à la rotation du rotor. Ainsi, la présente invention concerne plus particulièrement, mais non exclusivement, les rotors à axe non parallèle à la direction d'écoulement du fluide, comme les rotors de type Savonius.

Un rotor de type Savonius comprend classiquement deux ou plusieurs pales rigides, de forme semi-cylindrique, disposées de manière symétrique autour de l'axe de rotation du rotor. Le diamètre de chacune des pales est compris entre le rayon et le diamètre du rotor. Lorsque le diamètre des pales est supérieur au rayon du rotor, les faces concaves des pales se font face partiellement deux à deux.

Les rotors de type Savonius présentent l'avantage d'offrir un couple élevé au démarrage et donc de pouvoir démarrer à de faibles vitesses d'écoulement de fluide. Les rotors de ce type offrent également des performances indépendantes de la direction d'écoulement du fluide dans un plan perpendiculaire à l'axe du rotor, et sont relativement peu encombrants. Leur vitesse de rotation optimale est relativement faible, de l'ordre de la vitesse d'écoulement du fluide à l'extrémité extérieure des pales. Par comparaison, les éoliennes de type Darreius, également à axe vertical présentent une vitesse à l'extrémité des pales de l'ordre de cinq fois la vitesse d'écoulement du fluide. Pour les éoliennes à axe horizontal, cette vitesse est de l'ordre de dix fois la vitesse d'écoulement du fluide. Les rotors de type Savonius sont donc moins sensibles aux impacts éventuels d'objets contre les pales et présentent peu de danger pour les objets en mouvement dans l'écoulement. L'inconvénient principal des rotors de ce type réside dans leur rendement relativement faible. Ils présentent également un couple variable durant un tour de rotation des pales, et une masse relativement élevée.

Le document US 2012/0280510 A1 décrit une éolienne à axe vertical.

Le document JP 2009-209 728 décrit un rotor de type Savonius avec des pales verticales ayant chacune partie élastiquement déformable le long d'un bord d'attaque de la pale. Cette partie déformable est déplacée vers l'axe du rotor ou dans une direction opposée par une came excentrique prévue dans des parties supérieure et inférieure du rotor, cette came étant entrainée par un moteur commandé par une unité de contrôle.

Il a été démontré qu'un rotor de type Savonius à deux pales présente un rendement maximum lorsque la distance entre les bords longitudinaux intérieurs des deux pales est de l'ordre d'un sixième du diamètre du rotor défini par la distance entre les bords longitudinaux extérieurs deux des pales. Même si cette condition est réalisée, le rendement d'un tel rotor reste faible.

Il peut donc être souhaitable d'améliorer le rendement d'un rotor de type Savonius. Il est également souhaitable de définir une structure de rotor de type Savonius qui soit robuste et peu sensible à la présence de débris dans le fluide, tout en présentant un faible coût de fabrication.

Des modes de réalisation concernent un rotor comprenant deux pales tournant autour d'un axe de rotation, chaque pale comprenant un bord longitudinal intérieur le long de l'axe de rotation et un bord longitudinal extérieur, ou bien l'axe de rotation est situé entre un bord longitudinal intérieur et un bord longitudinal extérieur de chaque pale, chaque pale étant configurée pour transmettre à l'axe de rotation, durant un tour de rotation du rotor autour de l'axe de rotation, sous l'effet de l'écoulement d'un fluide, alternativement un couple moteur entrainant en rotation le rotor autour de l'axe de rotation, et un couple résistant tendant à s'opposer à la rotation du rotor autour de l'axe de rotation. Selon l'invention, chacune des deux pales comprend dans une région de son bord longitudinal extérieur de la pale, une partie flexible réalisée en un matériau flexible afin de se rétracter d'un côté d'une direction tangentielle au bord longitudinal extérieur de la pale vers l'intérieur du rotor en une position rétractée, lorsque la pale transmet le couple résistant à l'axe de rotation du rotor, et pour se déployer d'un autre côté de la direction tangentielle vers l'extérieur du rotor lors d'un demi-tour de rotation de rotor, en une position déployée maximale, lorsque la pale transmet le couple moteur à l'axe de rotation du rotor lors d'un demi-tour de rotation de rotor suivant, la partie flexible de chaque pale étant entrainée automatiquement entre ses positions rétractée et déployée sous l'effet de l'écoulement du fluide sans autre moyen actif.

Selon un mode de réalisation, la partie flexible présente une largeur comprise entre la moitié et une fois et demi le rayon du rotor, correspondant à la distance entre l'axe de rotation du rotor et le bord longitudinal extérieur d'une des pales.

Selon un mode de réalisation, la partie flexible présente une largeur comprise entre une fois et une fois et demi le rayon du rotor, correspondant à la distance entre l'axe de rotation du rotor et le bord longitudinal extérieur d'une des pales.

Selon un mode de réalisation, au moins une des pales se trouve d'un côté d'un plan passant par un point du bord longitudinal intérieur de la pale et l'axe de rotation, tandis que la partie flexible de la pale se trouve au moins en partie de l'autre côté de ce plan.

Selon un mode de réalisation, au moins une des pales comprend une partie rigide comprenant le bord longitudinal extérieur de la pale, la partie flexible de la pale comprenant un volet flexible fixé le long du bord longitudinal extérieur de la pale.

Selon un mode de réalisation, les pales sont disposées autour de l'axe de rotation de manière à ce que des faces concaves des pales se font face partiellement.

Selon un mode de réalisation, les pales sont jointives le long de l'axe de rotation du rotor.

Selon un mode de réalisation, au moins une des pales comprend une partie interne rigide entre le bord longitudinal intérieur de la pale et le bord longitudinal extérieur de la pale, la partie flexible de la pale étant fixée le long du bord longitudinal extérieur de la pale.

Selon un mode de réalisation, chacune des pales comprend une partie interne rigide présentant dans un plan perpendiculaire à l'axe de rotation un profil courbe, plan ou semi-circulaire.

Selon un mode de réalisation, chaque pale comprend une partie centrale rigide, au moins une des pales présentant une partie latérale flexible le long du bord longitudinal intérieur de la pale.

Des modes de réalisation concernent également une éolienne comprenant un rotor tel que précédemment défini.

Des modes de réalisation concernent également une hydrolienne comprenant un rotor tel que précédemment défini, le rotor étant plongé dans un liquide, l'axe de rotation du rotor étant sensiblement vertical.

Selon un mode de réalisation, l'hydrolienne comprend un générateur d'électricité couplé au rotor et disposé au-dessus du rotor et de la surface du liquide.

Des exemples de réalisation de l'invention seront décrits dans ce qui suit, à titre non limitatif en relation avec les figures jointes parmi lesquelles :
la figure 1 est une vue en perspective d'un rotor, selon un mode de réalisation,
la figure 2 est une vue axiale en coupe du rotor,
la figure 3 est une vue latérale du rotor, selon un mode de réalisation,
les figures 4A à 4C représentent en coupe le rotor suivant différentes orientations par rapport à la direction d'écoulement d'un fluide dans lequel le rotor est plongé,
la figure 5 est une vue axiale en coupe du rotor et illustre différents phases d'action des pales sur la rotation du rotor en fonction de la direction d'écoulement d'un fluide dans lequel le rotor est plongé,
la figure 6 est une vue axiale en coupe d'un rotor classique de type Savonius et illustre différentes phases d'action des pales sur la rotation du rotor en fonction de la direction d'écoulement d'un fluide dans lequel le rotor est plongé,
les figures 7A à 7E sont des vues axiales en coupe de rotors selon divers autres modes de réalisation,
les figures 8 et 9 sont des vues axiales en coupe de rotors selon d'autres modes de réalisation,
les figures 10 et 11 représentent en coupe une partie d'une pale au voisinage du bord longitudinal extérieur de la pale.

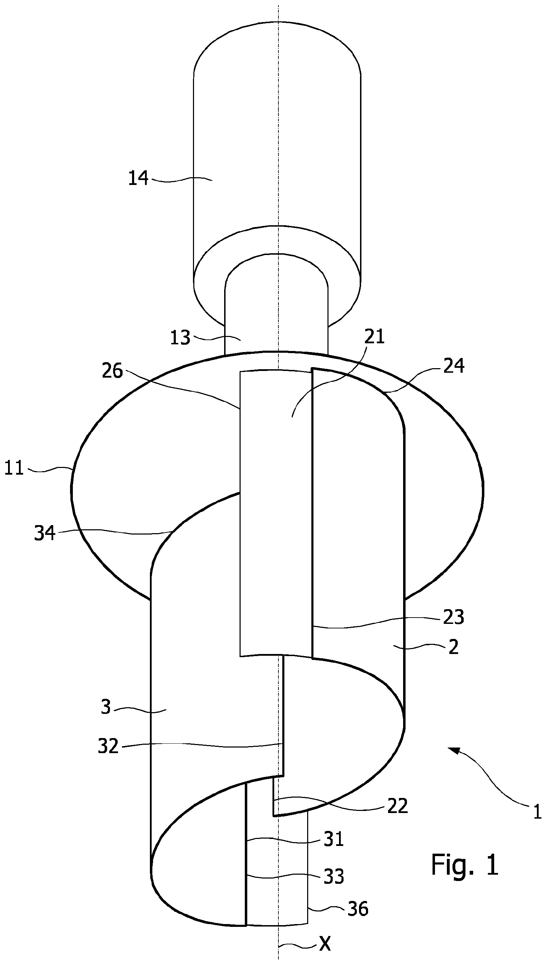

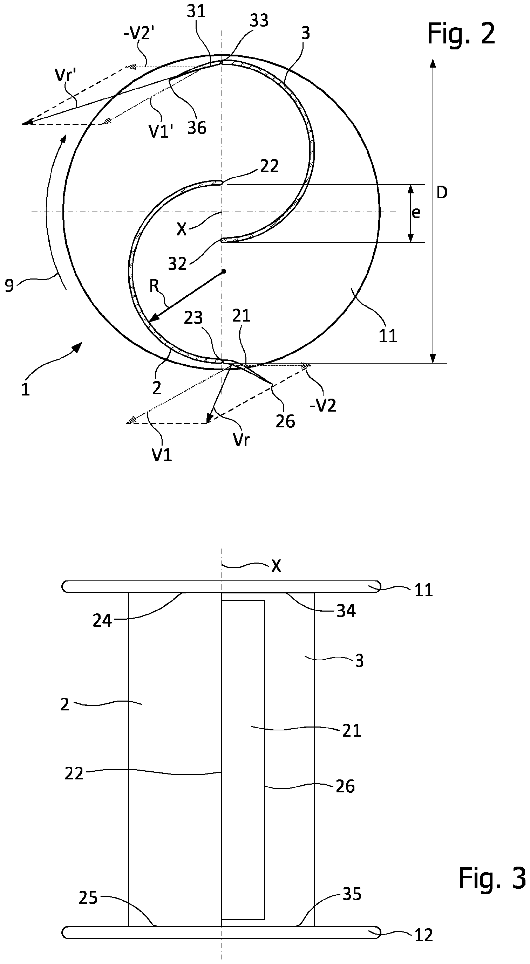

Les figures 1, 2 et 3 représentent un rotor 1 de type Savonius ayant un axe de rotation X, et comprenant des pales 2, 3 uniformément réparties autour de l'axe X. Les pales 2, 3 présentent chacune un profil courbe dans un plan perpendiculaire à l'axe X, avec une face concave, une face convexe, un bord longitudinal intérieur 22, 32 proche de l'axe X du rotor et un bord longitudinal extérieur 23, 33 plus éloigné de l'axe X que le bord longitudinal intérieur 22, 32. Les pales 2, 3 peuvent être fixées par un bord transversal 24, 34 sur un plateau 11, par exemple en forme de disque, perpendiculaire à l'axe X, ou par des bords transversaux opposés 24, 25, 34, 35, entre deux flasques 11, 12, par exemple en forme de disque, perpendiculaires à l'axe X (figure 3). Les pales 2, 3 peuvent être fixées sur le plateau 11 ou entre les flasques 11, 12 de manière à ce que l'axe X soit situé entre les bords longitudinaux intérieur 22, 32 et extérieur 23, 33 de chaque pale 2, 3. Le plateau 11 peut être couplé au rotor d'un générateur électrique 14 (figure 1), soit directement par l'intermédiaire d'un arbre 13 coaxial à l'axe X, soit par l'intermédiaire d'un multiplicateur mécanique.

Quelle que soit la direction de déplacement dans un plan perpendiculaire à l'axe de rotation X, du fluide dans lequel il est plongé, le rotor 1 tourne dans une même direction indiquée par la flèche 9 sur la figure 2.

Le rotor 1 peut être utilisé dans n'importe quel fluide, tel que l'air et/ou l'eau, ou même un fluide complexe tel qu'un liquide surmonté d'un gaz, ou un liquide mélangé à des particules solides, avec son axe de rotation X disposé dans n'importe quelle direction, à l'exception de la direction d'écoulement du fluide, par exemple verticalement ou horizontalement. Dans l'eau (ou un autre liquide), seul le rotor 1 peut être immergé avec son axe de rotation sensiblement vertical, en maintenant le générateur 14 au-dessus de l'eau. Ainsi, il est possible de disposer le rotor 1 couplé à un générateur en évitant qu'une interface entre deux pièces mobiles l'une par rapport à l'autre soit immergée. Il est à noter qu'en mer si le rotor est flottant, en présence de houle notamment, l'axe X du rotor peut être amené à varier d'une manière importante autour de la verticale, par exemple entre [-30°,+30°] par rapport à la verticale, sans que le rendement du rotor ne s'en trouve affecté. Il n'est donc pas nécessaire que la direction d'écoulement du fluide soit fixe et perpendiculaire à l'axe de rotation du rotor.

Selon un mode de réalisation, un volet 21, 31 flexible est fixé au bord longitudinal extérieur 23, 33 de chaque pale 2, 3, de manière à pouvoir s'orienter librement sous l'effet de l'écoulement du fluide au voisinage du bord 23, 33. Chaque volet 21, 31 peut s'étendre sur la totalité du bord longitudinal extérieur 23, 33 de la pale 2, 3 ou sur une partie seulement de ce bord, ou bien être divisé en plusieurs tronçons fixés au bord 23, 33 de la pale 2, 3. En effet, il peut être avantageux de prévoir de diviser les volets en tronçons si le rotor peut subir localement des variations en intensité et/ou en direction de l'écoulement du fluide. Dans ce cas, chaque tronçon de volet peut s'orienter entre ses positions totalement déployée et rétractée, en fonction de la direction et de l'intensité de l'écoulement du fluide qu'il subit. Il peut également être prévu que plonger le rotor dans différentes couches de fluides superposées, comme dans l'eau et dans l'air. Dans ce cas, la largeur et la flexibilité ou l'amplitude de débattement de chaque tronçon de volet peuvent être également adaptées à la densité et la viscosité du fluide dans lequel le tronçon de volet est destiné à être immergé.

Chaque volet 21, 31 peut s'étendre jusqu'à une certaine distance de chaque flasque 11, 12, pour ne pas être gêné dans ses mouvements par les flasques 11, 12. Cette disposition peut également permettre de réduire le risque qu'un objet se coince entre le volet et la flasque. La largeur de chaque volet 21, 31 peut dépendre de la flexibilité du volet. Le débattement angulaire du bord libre 26, 36 de chaque volet 21, 31 peut ainsi atteindre [120°, +120°] par rapport à la direction de la tangente au bord longitudinal extérieur 23, 33 de la pale où le volet est fixé. En outre, chacun des volets 21, 31 ne doit pas pouvoir masquer totalement une entrée du rotor en restant plaqué contre l'autre pale sous l'effet de la poussée exercée par le fluide. Cette dernière condition peut être réalisée avec des volets suffisamment étroits ou rigides pour ne pas rester plaqué contre l'autre pale pendant plus d'un demi-tour de rotor. Ainsi, la largeur de chaque volet 21, 31 peut être telle que le volet peut entrer en contact avec l'autre pale en position rétractée, dès lors qu'il ne reste pas dans cette position pendant plus d'un demi-tour de rotor, ou qu'il bascule et reste en position déployée pendant au moins un demi-tour de rotor.

La largeur de chaque volet 21, 31 peut par exemple être comprise entre la moitié et deux fois le rayon du rotor 1, selon la rigidité du volet. Selon un mode de réalisation, la largeur chaque volet 21, 31 est comprise entre une fois et une fois et demi le rayon du rotor 1, selon la rigidité du volet. Dans cette plage, il est possible d'atteindre un doublement du rendement du rotor.

A noter que la largeur de chaque volet n'est pas nécessairement constante sur toute la hauteur de la pale 2, 3. De même, le rayon des pales 2, 3 n'est pas nécessairement constant sur toute la hauteur des pales. Les bords longitudinaux intérieur 22, 32 et extérieur 23, 33 de chaque pale 2, 3 ne sont pas non plus nécessairement rectilignes et parallèles à l'axe de rotation X, mais peuvent avoir toute autre forme, par exemple une forme hélicoïdale autour de l'axe X.

Chaque volet 21, 31 peut être réalisé dans un matériau flexible, tel qu'une résine ou une toile tissée ou non tissée, éventuellement enduite d'une résine. Chaque volet 21, 31 peut être fixé sur le bord longitudinal extérieur 23, 33 de l'une des pales 2, 3 par tout moyen adapté aux matériaux dans lesquels sont réalisés les pales 2, 3 et les volets 21, 31. Ainsi, chaque volet 21, 31 peut être fixé à l'une des pales 2, 3 par exemple à l'aide de colle, de bandes adhésives, de vis, de clous ou de rivets.

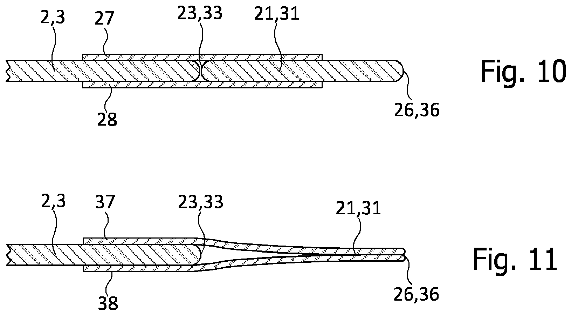

Les volets 21, 31 peuvent également être rigides et fixés aux bords 23, 33 des pales 2, 3 par une liaison flexible formant une charnière avec un débattement limité pour éviter un retournement et un plaquage des volets contre une autre pale. Ainsi, la figure 10 représente en coupe une pale 2, 3 au voisinage de son bord longitudinal extérieur 23, 33. Le volet 21, 31 est fixé à la pale dans le prolongement du bord longitudinal extérieur 23, 33 de la pale, par des bandes ou des feuilles 27, 28 fixées, par exemple par collage, respectivement sur les deux faces de la pale et du volet. Les feuilles 27, 28 peuvent recouvrir la totalité du volet et/ou de la pale.

Chacune des pales 2, 3 avec son volet 21, 31 respectif peut également être réalisée en une seule pièce, par exemple par moulage, la flexibilité de la partie correspondant au volet pouvant être obtenue par l'utilisation de différents matériaux ou en jouant sur l'épaisseur de la pale. La flexibilité de la partie correspondant au volet 21, 31 peut également résulter partiellement ou totalement de la position des points de fixation de la pale 2, 3 aux flasques 11, 12, la rigidité de la pale étant conférée en partie par le fait qu'elle est fixée aux flasques 11, 12, et la partie correspondant au volet n'étant pas fixée aux flasques.

Selon un mode de réalisation, chaque pale 2, 3 présente une rigidité qui diminue en allant du bord longitudinal intérieur 22, 32 au bord longitudinal extérieur 26, 36 de la partie volet 21, 31. Cette diminution peut être progressive ou par un ou plusieurs sauts, de manière à ce que la partie au voisinage du bord extérieur 26, 36 soit flexible. Ainsi, la figure 11 représente en coupe une pale 2, 3 au voisinage de son bord longitudinal extérieur 23, 33. Le volet 21, 31 est formé par deux bandes 37, 38 fixées, par exemple par collage, respectivement sur les deux faces de la pale le long du bord longitudinal extérieur 23, 33 de la pale, de manière à prolonger ce bord et ainsi former le volet 21, 31 constitué des deux bandes 37, 38 fixées l'une contre l'autre au moins au voisinage du bord longitudinal extérieur 26, 36 du volet 21, 31.

Dans l'exemple des figures 1 à 3, le rotor 1 comprend deux pales disposées symétriquement autour de l'axe X, chaque pale présentant une forme semi-cylindrique (figures 1 et 3) ou un profil semi-circulaire dans un plan perpendiculaire à l'axe X (figures 1 à 3). Chacun des bords longitudinaux intérieurs 22, 32 d'une des deux pales 2, 3 est situé entre les bords longitudinaux intérieur et extérieur 22, 23, 32, 33 de l'autre des deux pales. Les bords longitudinaux intérieurs 22, 32 sont espacés d'une distance e qui peut être choisie égale au quart du rayon R de chaque pale 2, 3 ou au sixième du diamètre D du rotor 1, le diamètre D correspondant à la distance entre les bords longitudinaux extérieurs 23, 33 des deux pales 2, 3. Par ailleurs, dans l'exemple des figures 1 et 3, les bords 22, 32 et 23, 33 sont parallèles à l'axe X.

Durant la rotation du rotor 1, les volets souples 21, 31 tendent à s'orienter suivant la direction et en fonction de l'amplitude de la vitesse apparente du fluide. Cette vitesse apparente est définie par un vecteur vitesse Vr, Vr' correspondant à la différence vectorielle d'un vecteur vitesse V1, V1' lié en amplitude et en direction à la vitesse d'écoulement du fluide au voisinage du volet 21, 31, et d'un vecteur vitesse V2, V2' ayant une amplitude lié à la vitesse linéaire du bord longitudinal 23, 33 et une direction tangentielle à la pale 2, 3 vers l'intérieur de la pale dans la région du bord longitudinal 23, 33. A noter que le vecteur vitesse V1, V1' est également lié à la position angulaire du rotor 1 par rapport à la direction d'écoulement du fluide correspondant à la direction des vecteurs V1, V1'. En effet, dans une région en aval du rotor 1 par rapport à la direction d'écoulement du fluide, le volet 21, 31 ne subit pas ou peu la force d'écoulement du fluide. Au démarrage du rotor 1 et jusqu'à ce que la vitesse linéaire des volets 21, 31 en rotation autour de l'axe X atteigne la vitesse d'écoulement du fluide, le vecteur vitesse apparent Vr, Vr' au voisinage de chacun des volets 21, 31 peut avoir n'importe quelle direction. Lorsque leur vitesse linéaire devient supérieure à celle du fluide, le vecteur vitesse apparent Vr, Vr' est dirigé dans un secteur angulaire centré sur la direction tangentielle à la pale 2, 3 vers l'extérieur dans la région du bord longitudinal 23, 33 (direction du vecteur vitesse V2 sur la figure 2), et limité à [-90°, +90°]. A noter toutefois que la vitesse linéaire optimale du bord extérieur 23, 33 de chaque pale d'un rotor de type Savonius est située entre 0,5 et 0,7 fois la vitesse d'écoulement du fluide.

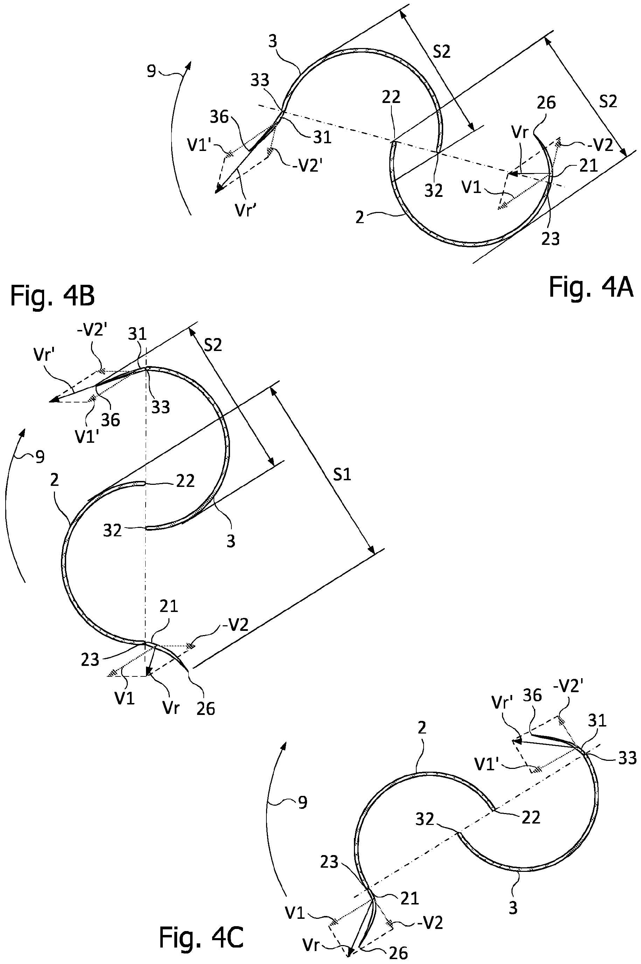

Les figures 4A à 4C représentent les pales 2, 3 et la direction du vecteur vitesse apparent Vr, Vr' du fluide, dans différentes configurations pouvant se produire durant un tour du rotor 1, dans le cas où la vitesse linéaire des volets 21, 31 (ou des bords extérieurs 23, 33) est inférieure à la vitesse d'écoulement du fluide. Sur sensiblement la moitié d'un tour du rotor 1, le vecteur vitesse apparent Vr au voisinage du volet 21 est dirigé vers l'extérieur du rotor 1, tandis qu'au voisinage du volet 31, ce vecteur vitesse apparent Vr' est dirigé vers l'intérieur du rotor (figures 4B, 4C). Sur l'autre moitié d'un tour du rotor 1, les orientations des vecteurs vitesse apparents Vr, Vr' au voisinage des deux volets 21, 31 sont inversés (figure 4A). Par ailleurs, lorsque la vitesse linéaire V2, V2' des volets 21, 31 est inférieure à la vitesse d'écoulement du fluide V1, le vecteur vitesse apparent peut être dirigé dans une direction susceptible d'entrainer un retournement du volet 21, c'est-à-dire avoir une composante suivant la direction du vecteur V2, V2', ayant une direction opposée à ce dernier. Ainsi, sur la figure 4A, le vecteur vitesse Vr est susceptible de retourner le volet 21 vers l'intérieur du rotor 1. Sur la figure 4B, le vecteur vitesse Vr est susceptible de retourner le volet 21 vers l'extérieur du rotor 1. Le passage de la configuration de la figure 4A à celle de la figure 4B provoque le basculement du volet 21 de l'intérieur vers l'extérieur.

Lorsque l'un des deux volets 21 subit une vitesse apparente de fluide Vr dirigée vers l'extérieur du rotor 1 (figure 4B), il a tendance à se déployer (vers l'extérieur du rotor 1) et donc à augmenter la surface frontale S1 de la pale 2, opposée à l'écoulement du fluide (surface projetée sur un plan perpendiculaire à la direction d'écoulement du fluide). Il peut être noté également que ce déploiement se produit lorsque la pale oppose sa face concave à l'écoulement du fluide. Il en résulte une augmentation du couple moteur transmis par la pale 2 à l'axe de rotation X du rotor, tendant à faire tourner le rotor 1. Inversement, lorsque l'un des deux volets 31 subit une force vers l'intérieur du rotor 1, il a tendance à s'effacer (vers l'intérieur du rotor 1) et donc à diminuer la surface frontale S2 (inférieure à S1) de la pale 3 opposée à l'écoulement du fluide. Il peut être noté également que cet effacement se produit lorsque la pale oppose sa face convexe à l'écoulement du fluide. Il en résulte une diminution du couple résistif exercé par la pale 3 (par rapport à celui qu'aurait la pale si son volet restait en configuration déployée), durant une phase où elle tend à s'opposer à la rotation du rotor 1.

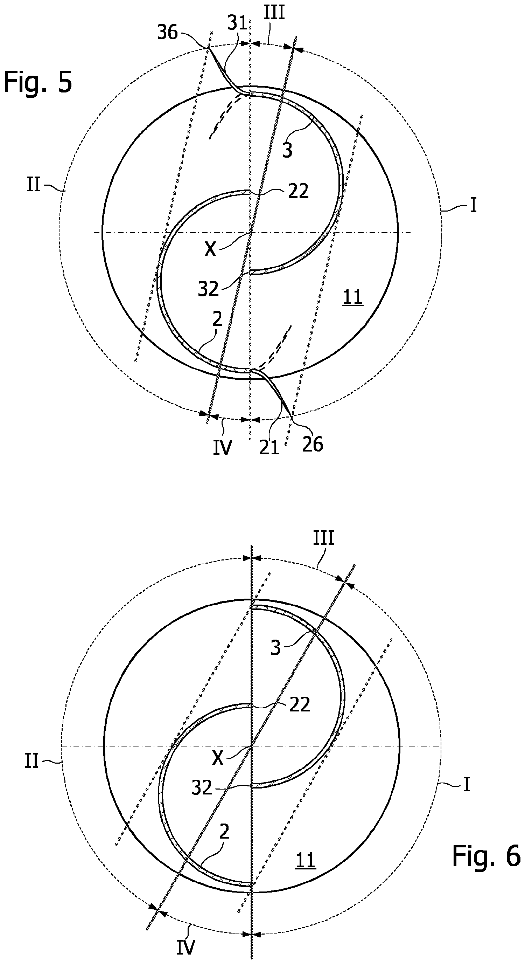

La figure 5 représente différentes phases de fonctionnement I à IV du rotor 1 en fonction de la direction d'écoulement du fluide, dans un repère lié au rotor. Les différentes phases I à IV correspondent donc à des secteurs angulaires d'incidence de l'écoulement du fluide sur le rotor 1. Durant la phase I, la pale 2 reçoit le fluide sur sa face concave et donc exerce un couple moteur sur le rotor 1. Durant cette phase, la pale 3 reçoit le fluide sur sa face convexe et donc exerce un couple résistif sur le rotor. Durant la phase II, les rôles respectifs des pales 2, 3 sont inversés. Ainsi, la pale 3 exerce un couple moteur sur le rotor, tandis que la pale 2 exerce un couple résistif. Les phases I et II sont donc alternativement des phases motrices et résistives pour chacune des pales 2, 3. Les phases III et IV entre les phases I et II délimitent des secteurs angulaires "morts", dans lesquels le fluide n'entre en prise avec la face concave d'aucune des pales 2, 3. En réalité, les pales continuent à exercer un faible couple moteur durant les phases III et IV.

A titre de comparaison, la figure 6 représente les différentes phases de fonctionnement I à IV d'un rotor de type Savonius classique. Il apparaît que les secteurs angulaires "morts" correspondants aux phases III et IV sont moins étendus sur la figure 5 que sur la figure 6, grâce à la présence des volets flexibles 21, 31.

Il est à noter que les parties flexibles et les volets qui viennent d'être décrits s'orientent automatiquement par rapport aux pales, sous l'effet de l'écoulement du fluide, sans qu'il soit nécessaire de prévoir des moyens actifs pour orienter les parties flexibles et les volets. A noter également que les parties flexibles ou les volets sont situés plus loin de l'axe de rotation X que les pales. Par conséquent, en position déployée, les forces qu'ils reçoivent de l'écoulement du fluide produisent un couple moteur proportionnellement plus grand (dépendant de la distance entre le point d'application de la force et l'axe de rotation X) que le couple moteur exercé par la pale motrice. L'invention permet donc d'améliorer le rendement du rotor, à l'aide de moyens simples et donc à un coût relativement modeste.

Il apparaîtra clairement à l'homme de l'art que la présente invention est susceptible de diverses variantes de réalisation et diverses pplications.

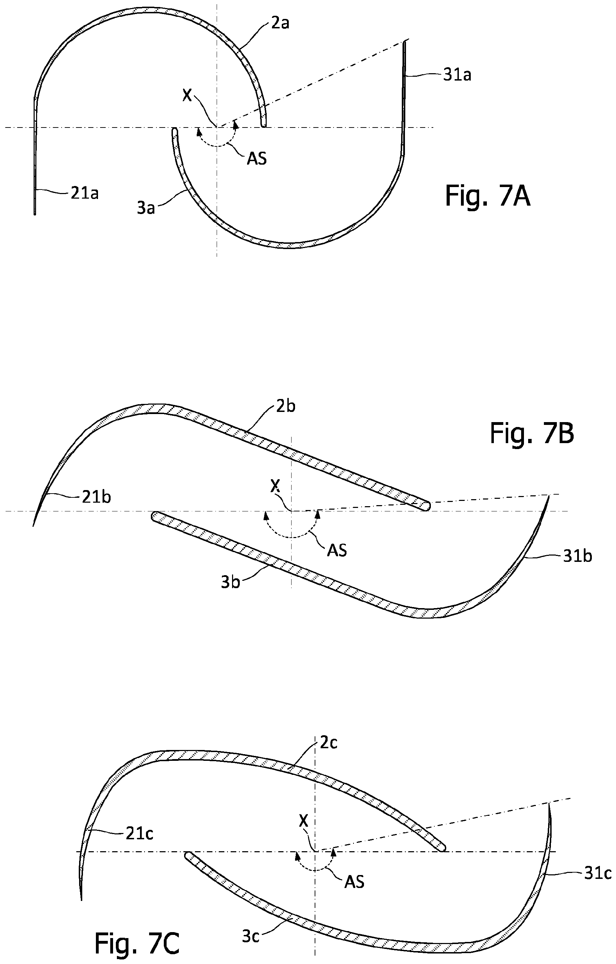

L'invention n'est pas non plus limitée à un rotor comportant des pales semi-cylindriques et des volets prolongeant les bords extérieurs des pales. Ainsi, les figures 7A à 7E présentent des profils de rotor selon divers autres modes de réalisation.

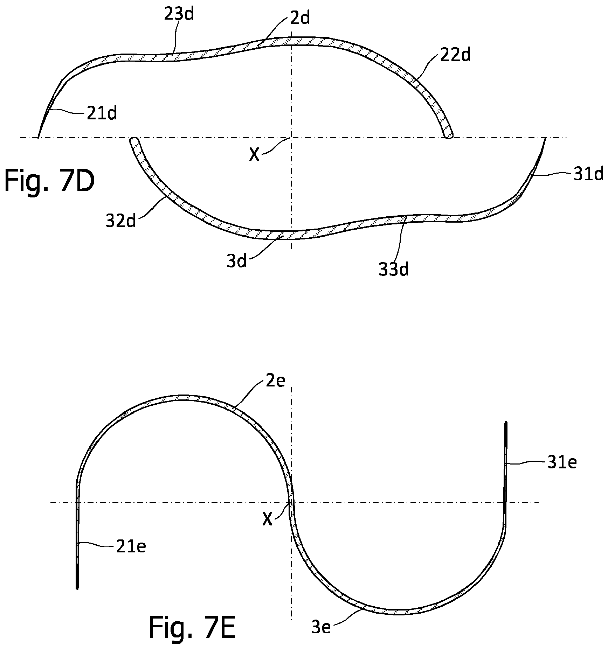

Sur la figure 7A, les pales 2a, 2b sont formées en une seule pièce avec une partie interne rigide ayant un profil semi-circulaire dans un plan perpendiculaire à l'axe X, et une extension flexible 21a, 31a du bord extérieur (par rapport à l'axe X du rotor) de la partie interne. Sur la figure 7B, les pales 2b, 3b sont planes et disposées en regard l'une de l'autre, chaque pale comportant un bord solidaire d'un prolongement flexible 21b, 31b. Sur la figure 7C, les pales 2c, 3c diffèrent de celles de la figure 7B en ce que la partie plane de chaque pale est remplacée par une partie légèrement courbée avec une face concave du côté de l'axe X du rotor. Les parties flexibles 21c, 31c des pales 2c, 3c sont sensiblement identiques aux parties flexibles 21b, 31b. Sur la figure 7D, le profil ou la section de chaque pale 2d, 3d dans un plan perpendiculaire à l'axe X du rotor présente une forme plus complexe, comportant une partie intérieure 22d, 32d (par rapport à l'axe X du rotor) décrivant sensiblement un quart de cercle, suivie d'une partie légèrement convexe 23d, 33d orientée vers l'axe X, et d'une partie flexible 21d, 31d contournant en partie le bord longitudinal intérieur de l'autre pale.

Selon un mode de réalisation, tout ou partie de la partie flexible de chaque pale du rotor s'étend d'un côté d'un plan passant par un point du bord longitudinal intérieur de la pale et l'axe de rotation du rotor, tandis que la pale se trouve de l'autre côté de ce plan (figures 1, 2, 7A à 7C). En d'autres termes, chaque pale entoure l'axe X du rotor sur un secteur angulaire AS supérieur à 180°. Dans l'exemple de la figure 7D, chaque pale entoure l'axe X du rotor sur un secteur angulaire voisin de 180°.

Par ailleurs, il n'est pas non plus nécessaire que les pales du rotor soient fixées sur le support 11 de manière à ce que l'axe X du rotor soit situé entre les bords longitudinaux intérieur et extérieur de chaque pale. En effet, les bords longitudinaux intérieurs de toutes les pales du rotor peuvent être jointifs dans la région de l'axe X du rotor, comme illustré par la figure 7E. Sur cette figure, les pales 2e, 3e présentent chacune sensiblement un même profil que celles de la figure 7A avec des parties externes flexibles 21e, 31e, mais des bords longitudinaux intérieurs jointifs dans la région de l'axe X du rotor. Cette disposition permet notamment d'éviter qu'un objet se coince entre les pales.

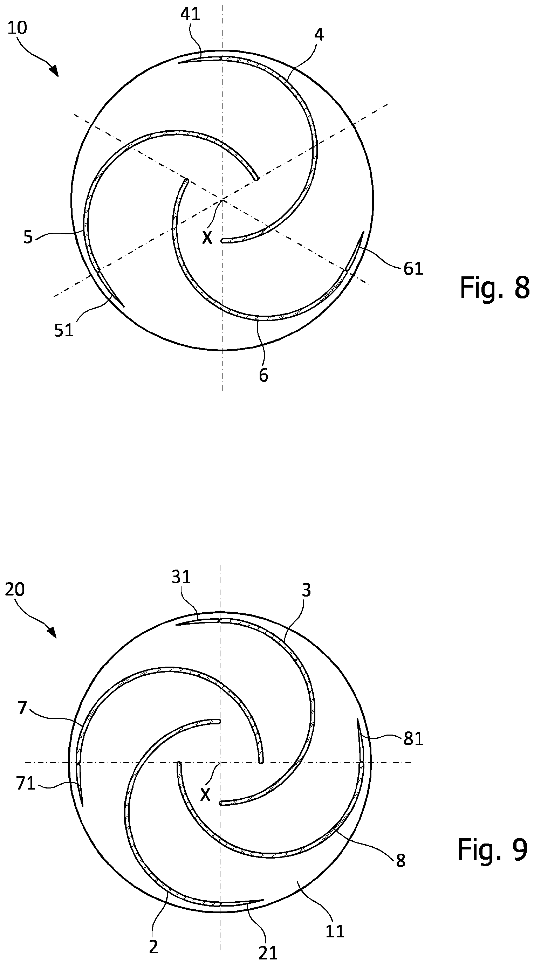

L'invention n'est pas non plus limitée à un rotor à deux pales, mais couvre également des rotors à trois ou davantage de pales, chaque pale ayant une partie extérieure flexible. Ainsi, la figure 8 représente un rotor 10 à trois pales 4, 5, 6 ayant un profil semi-circulaire, réparties uniformément autour de l'axe de rotation X du rotor 10, et comportant une partie flexible 41, 51, 61 prolongeant le profil semi-circulaire vers l'extérieur du rotor. La figure 9 représente un rotor 20 à quatre pales 2, 3, 7, 8 disposées symétriquement autour de l'axe X du rotor 20, c'est-à-dire comprenant deux pales supplémentaires 7, 8 par rapport au rotor 1. Une partie flexible 21, 31, 71, 81 prolonge le profil semi-circulaire de chaque pale 2, 3, 7, 8 vers l'extérieur du rotor.

Dans le cas de pales en une seule pièce avec une partie rigide et une partie flexible, seul un bord transversal de la partie rigide est fixé à la flasque 11, ou seuls les bords transversaux de la partie rigide de chaque pale sont fixés aux flasques 11, 12. Les bords transversaux des parties flexibles ne sont pas fixés aux flasques 11, 12.

En outre, dans le cas de pales présentant des régions de rigidités différentes, la région rigide d'une des pales ne s'étend pas nécessairement à partir de son bord longitudinal intérieur jusqu'à la partie flexible de la pale dans la région de son bord longitudinal extérieur. En effet, il peut être prévu que la région du bord longitudinal intérieur d'une des pales soit flexible. Ainsi, la région du bord longitudinal intérieur de la pale peut également se rétracter ou se déployer en fonction de la face, concave ou convexe de la pale qui est opposée au flux d'écoulement du fluide. Dans ce cas, les bords transversaux de la région du bord longitudinal intérieur de la pale ne sont pas non plus fixés aux flasques 11, 12. Ainsi, seuls les bords transversaux d'une région centrale de la pale peuvent être fixés à une ou deux flasques. L'invention n'est pas non plus limitée à des pales cylindriques, mais couvre également des pales ayant d'autres formes, telles qu'une forme hélicoïdale, notamment pour s'affranchir de variations du couple moteur exercé par chacune des pales durant la rotation du rotor. Dans ce cas, les volets ou les parties flexibles peuvent être divisés en tronçons pouvant se déployer et se rétracter individuellement en fonction du couple moteur ou résistif exercé par le tronçon de pale auquel il est lié. Il est à noter également qu'un rotor à pales hélicoïdales peut être entrainé en rotation même si l'axe de rotation du rotor est disposé suivant la direction d'écoulement du fluide.

## Revendications

1. Rotor comprenant deux pales (2, 3) tournant autour d'un axe de rotation (X), chaque pale comprenant un bord longitudinal intérieur (22, 32) le long de l'axe de rotation et un bord longitudinal extérieur (23, 33), ou bien l'axe de rotation est situé entre un bord longitudinal intérieur (22, 32) et un bord longitudinal extérieur (23, 33) de chaque pale, chaque pale étant configurée pour transmettre à l'axe de rotation, durant un tour de rotation du rotor (1) autour de l'axe de rotation, sous l'effet de l'écoulement d'un fluide, alternativement un couple moteur entrainant en rotation le rotor autour de l'axe de rotation, et un couple résistant tendant à s'opposer à la rotation du rotor autour de l'axe de rotation,
chacune des deux pales (2, 3) comprenant dans une région de son bord longitudinal extérieur (23, 33), une partie flexible (21, 31) réalisée en un matériau flexible afin de se rétracter d'un côté d'une direction tangentielle au bord longitudinal extérieur de la pale vers l'intérieur du rotor en une position rétractée, lorsque la pale transmet le couple résistant à l'axe de rotation (X) du rotor lors d'un demi-tour de rotation de rotor, et pour se déployer d'un autre côté de la direction tangentielle vers l'extérieur du rotor en une position déployée maximale, lorsque la pale transmet le couple moteur à l'axe de rotation du rotor lors d'un demi-tour de rotation de rotor suivant, la partie flexible de chaque pale étant entrainée automatiquement entre ses positions rétractée et déployée sous l'effet de l'écoulement du fluide sans autre moyen actif.

2. Rotor selon la revendication 1, dans lequel la partie flexible (21, 31) présente une largeur comprise entre la moitié et une fois et demi le rayon du rotor (1), correspondant à la distance entre l'axe de rotation (X) du rotor et le bord longitudinal extérieur (23, 33) d'une des pales (2, 3).

3. Rotor selon la revendication 1 ou 2, dans lequel la partie flexible (21, 31) présente une largeur comprise entre une fois et une fois et demi le rayon du rotor (1), correspondant à la distance entre l'axe de rotation (X) du rotor et le bord longitudinal extérieur (23, 33) d'une des pales (2, 3).

4. Rotor selon l'une des revendications 1 à 3, dans lequel au moins une des pales se trouve d'un côté d'un plan passant par un point du bord longitudinal intérieur (22, 32) de la pale et l'axe de rotation (X), tandis que la partie flexible (21, 31) de la pale se trouve au moins en partie de l'autre côté de ce plan.

5. Rotor selon l'une des revendications 1 à 4, dans lequel au moins une des pales (2, 3) comprend une partie rigide comportant le bord longitudinal extérieur (23, 33) de la pale, la partie flexible (21, 31) de la pale comprenant un volet flexible (21, 31), fixé le long du bord longitudinal extérieur (23, 33) de la pale.

6. Rotor selon l'une des revendications 1 à 5, dans lequel les pales sont disposées autour de l'axe de rotation de manière à ce que des faces concaves des pales se font face partiellement.

7. Rotor selon l'une des revendications 1 à 5, dans lequel les pales (2, 3) sont jointives le long de l'axe de rotation (X) du rotor (1).

8. Rotor selon l'une des revendications 1 à 7, dans lequel au moins une des pales (2, 3) comprend une partie interne rigide entre le bord longitudinal intérieur (22, 32) de la pale et le bord longitudinal extérieur (23, 33) de la pale, la partie flexible de la pale étant fixée le long du bord longitudinal extérieur de la pale .

9. Rotor selon l'une des revendications 1 à 8, dans lequel chacune des pales comprend une partie interne rigide présentant dans un plan perpendiculaire à l'axe de rotation (X) un profil courbe, plan ou semi-circulaire.

10. Rotor selon l'une des revendications 1 à 9, dans lequel chaque pale (2, 3) comprend une partie centrale rigide, au moins une des pales présentant une partie latérale flexible le long du bord longitudinal intérieur (22, 32) de la pale.

11. Eolienne comprenant un rotor selon l'une des revendications 1 à 10.

12. Hydrolienne comprenant un rotor (1) selon l'une des revendications 1 à 10, le rotor étant plongé dans un liquide, l'axe de rotation (X) du rotor étant sensiblement vertical.

13. Hydrolienne selon la revendication 12, comprenant un générateur d'électricité (14) couplé au rotor (1) et disposé au-dessus du rotor et de la surface du liquide.

## Patentansprüche

1. Rotor mit zwei Schaufeln (2, 3), die sich um eine Drehachse (X) drehen, wobei jede Schaufel eine innere Längskante (22, 32) entlang der Drehachse und eine äußere Längskante (23, 33) umfasst, oder wobei sich die Drehachse zwischen einer inneren Längskante (22, 32) und einer äußeren Längskante (23, 33) jeder Schaufel befindet, wobei jede Schaufel so konfiguriert ist, dass sie während einer Drehung des Rotors (1) um die Drehachse unter der Wirkung eines Fluidstroms abwechselnd ein Motordrehmoment, das den Rotor in Drehung um die Drehachse antreibt, und ein Widerstandsdrehmoment, das dazu neigt, der Drehung des Rotors um die Drehachse entgegenzuwirken, an die Drehachse überträgt, wobei jede der zwei Schaufeln (2, 3) in einem Bereich ihrer äußeren Längskante (23, 33) einen flexiblen Teil (21, 31) aus einem flexiblen Material umfasst, um von einer Seite einer tangential zur äußeren Längskante der Schaufel verlaufenden Richtung in das Innere des Rotors in eine eingefahrene Position einzufahren, wenn die Schaufel das Widerstandsdrehmoment während einer halben Umdrehung der Rotordrehung auf die Drehachse (X) des Rotors überträgt, und auf einer anderen Seite der tangential nach außen verlaufenden Richtung des Rotors in eine maximal ausgefahrene Position auszufahren, wenn die Schaufel das Motordrehmoment während einer nachfolgenden halben Umdrehung des Rotors auf die Drehachse des Rotors überträgt, wobei der flexible Teil jeder Schaufel automatisch zwischen seiner eingefahrenen und ausgefahrenen Position unter der Wirkung des Fluidstroms ohne andere aktive Mittel angetrieben wird.

2. Rotor nach Anspruch 1, wobei der flexible Teil (21, 31) eine Breite zwischen der Hälfte und dem Eineinhalbfachen des Radius des Rotors (1) aufweist, was dem Abstand zwischen der Drehachse (X) des Rotors und der äußeren Längskante (23, 33) einer der Schaufeln (2, 3) entspricht.

3. Rotor nach Anspruch 1 oder 2, wobei der flexible Teil (21, 31) eine Breite zwischen dem Einfachen und Eineinhalbfachen des Radius des Rotors (1) aufweist, was dem Abstand zwischen der Drehachse (X) des Rotors und der äußeren Längskante (23, 33) einer der Schaufeln (2, 3) entspricht.

4. Rotor nach einem der Ansprüche 1 bis 3, wobei sich mindestens eine der Schaufeln auf einer Seite einer Ebene befindet, die durch einen Punkt der inneren Längskante (22, 32) der Schaufel und der Drehachse (X) verläuft, während sich der flexible Teil (21, 31) der Schaufel zumindest teilweise auf der anderen Seite dieser Ebene befindet.

5. Rotor nach einem der Ansprüche 1 bis 4, wobei mindestens eine der Schaufeln (2, 3) einen starren Teil umfasst, der die äußere Längskante (23, 33) der Schaufel umfasst, wobei der flexible Teil (21, 31) der Schaufel eine flexible Klappe (21, 31) umfasst, die entlang der äußeren Längskante (23, 33) der Schaufel befestigt ist.

6. Rotor nach einem der Ansprüche 1 bis 5, wobei die Schaufeln um die Drehachse so angeordnet sind, dass konkave Flächen der Schaufeln teilweise einander zugewandt sind.

7. Rotor nach einem der Ansprüche 1 bis 5, wobei die Schaufeln (2, 3) entlang der Drehachse (X) des Rotors (1) zusammenhängend sind.

8. Rotor nach einem der Ansprüche 1 bis 7, wobei mindestens eine der Schaufeln (2, 3) einen starren Innenteil zwischen der inneren Längskante (22, 32) der Schaufel und der äußeren Längskante (23, 33) der Schaufel umfasst, wobei der flexible Teil der Schaufel entlang der äußeren Längskante der Schaufel befestigt ist.

9. Rotor nach einem der Ansprüche 1 bis 8, wobei jede der Schaufeln einen starren Innenteil umfasst, der in einer Ebene senkrecht zur Drehachse (X) ein gekrümmtes, ebenes oder halbkreisförmiges Profil aufweist.

10. Rotor nach einem der Ansprüche 1 bis 9, wobei jede Schaufel (2, 3) einen starren Mittelteil umfasst, wobei mindestens eine der Schaufeln einen flexiblen Seitenteil entlang der inneren Längskante (22, 32) der Schaufel aufweist.

11. Windturbine mit einem Rotor nach einem der Ansprüche 1 bis 10.

12. Gezeitenturbine mit einem Rotor (1) nach einem der Ansprüche 1 bis 10, wobei der Rotor in eine Flüssigkeit eingetaucht ist, wobei die Drehachse (X) des Rotors im Wesentlichen vertikal ist.

13. Gezeitenturbine nach Anspruch 12, umfassend einen Stromgenerator (14), der mit dem Rotor (1) gekoppelt und über dem Rotor und der Oberfläche der Flüssigkeit angeordnet ist.

## Claims

1. Rotor, comprising two blades (2, 3) rotating about an axis of rotation (X), each blade comprising an inner longitudinal edge (22, 32) along the axis of rotation and an outer longitudinal edge (23, 33), or the axis of rotation being located between an inner longitudinal edge (22, 32) and an outer longitudinal edge (23, 33) of each blade, each blade being configured to alternately transmit to the axis of rotation, during a rotation of the rotor (1) about the axis of rotation, under the effect of the flow of a fluid, a drive torque rotating the rotor about the axis of rotation and a resistive torque tending to oppose the rotation of the rotor about the axis of rotation, each of the two blades (2, 3) comprising, in a region of their outer longitudinal edge (23, 33), a flexible part (21, 31) made of a flexible material in order to retract on one side in a direction tangential to the outer longitudinal edge of the blade toward the interior of the rotor in a retracted position when the blade transmits the resistive torque to the axis of rotation (X) of the rotor during a half-turn of the rotor rotation, and in order to extend on a different side in the tangential direction toward the exterior of the rotor in a maximum extended position when the blade transmits the drive torque to the axis of rotation of the rotor during a subsequent half-turn of the rotor rotation, the flexible part of each blade being driven automatically between its retracted and extended positions under the effect of the flow of the fluid without other active means.

2. Rotor according to claim 1, wherein the flexible part (21, 31) has a width of between half and one and a half times the radius of the rotor (1), corresponding to the distance between the axis of rotation (X) of the rotor and the outer longitudinal edge (23, 33) of one of the blades (2, 3).

3. Rotor according to either claim 1 or claim 2, wherein the flexible part (21, 31) has a width of between one and one and a half times the radius of the rotor (1), corresponding to the distance between the axis of rotation (X) of the rotor and the outer longitudinal edge (23, 33) of one of the blades (2, 3).

4. Rotor according to any of claims 1 to 3, wherein at least one of the blades is located on one side of a plane passing through a point of the inner longitudinal edge (22, 32) of the blade and the axis of rotation (X), while the flexible part (21, 31) of the blade is at least partly located on the other side of this plane.

5. Rotor according to any of claims 1 to 4, wherein at least one of the blades (2, 3) comprises a rigid part including the outer longitudinal edge (23, 33) of the blade, the flexible part (21, 31) of the blade comprising a flexible flap (21, 31) fixed along the outer longitudinal edge (23, 33) of the blade.

6. Rotor according to any of claims 1 to 5, wherein the blades are arranged about the axis of rotation such that concave faces of the blades partially face one another.

7. Rotor according to any of claims 1 to 5, wherein the blades (2, 3) are contiguous along the axis of rotation (X) of the rotor (1).

8. Rotor according to any of claims 1 to 7, wherein at least one of the blades (2, 3) comprises a rigid internal part between the inner longitudinal edge (22, 32) of the blade and the outer longitudinal edge (23, 33) of the blade, the flexible part of the blade being fixed along the outer longitudinal edge of the blade.

9. Rotor according to any of claims 1 to 8, wherein each of the blades comprises a rigid internal part having, in a plane perpendicular to the axis of rotation (X), a curved, planar or semi-circular profile.

10. Rotor according to any of claims 1 to 9, wherein each blade (2, 3) comprises a rigid central part, at least one of the blades having a flexible lateral part along the inner longitudinal edge (22, 32) of the blade.

11. Wind turbine, comprising a rotor according to any of claims 1 to 10.

12. Tidal turbine, comprising a rotor (1) according to any of claims 1 to 10, the rotor being immersed in a liquid, the axis of rotation (X) of the rotor being substantially vertical.

13. Tidal turbine according to claim 12, comprising an electricity generator (14) coupled to the rotor (1) and arranged above the rotor and the surface of the liquid.
